# EUROPEAN PATENT SPECIFICATION

(11) **EP 0 686 223 B1**
(45) Date of publication and mention of the grant of the patent: **28.07.1999**
(21) Application number: 94907529.5
(22) Date of filing: 10.02.1994
(51) Int. Cl.: E04F 13/08, F16B 5/06

(54) **DEVICE AND METHOD FOR FIXING A PLATE TO A BUILDING**
VORRICHTUNG UND VERFAHREN ZUM BEFESTIGEN EINER PLATTE AN EINEM GEBÄUDE
DISPOSITIF ET PROCEDE DE FIXATION D'UNE PLAQUE A UN IMMEUBLE

(30) Priority: 25.02.1993 IT MI930364
(43) Date of publication of application: 13.12.1995
(73) Proprietor: FIN TRADE INTERNATIONAL S.A., 47031 Falciano, San Marino (SM)
(72) Inventor: Beltrami, Pietro Antonio, I-28041 Arona (IT)
(74) Representative: Forattini, Amelia
(86) International application number: EP9400375
(87) International publication number: WO9419561

(56) References cited:
- WO-A-89/02960
- DE-A- 1 684 060
- US-A- 4 635 424

## Description

The present invention relates to a facing system for anchoring a plate to a building and to the anchoring method. More particularly, the field of the present invention relates to a plate made of a stone material which is relatively thin, for example 1.5-2 cm, or made of ceramic material, or glass/crystal, or aluminium, or any other material which can be used to face walls. In particular, plates made of ceramic material are preferred, with respect to stone, because they have a higher mechanical strength and can be thinner.

The plates are used to cover walls on the inside and on the outside of buildings.

Various methods for covering buildings with plates are known; for example, cement mortars are used which however are not suitable for accurate execution of the work and do not offer sufficient reliability as regards safety in the case of very large faces, such as for example those of skyscrapers.

Other methods, disclosed for example in the German patent application No 2827502 and European patent application No 483673, provide for external supporting hooks which allow, in various manners, to fit the plates onto the walls. This system, apart from the aesthetic flaws due to the presence of hooks, has considerable problems if a single plate has to be replaced, because it is necessary to remove an entire adjacent region of plates until a so-called gutter is reached. Fitting times are also rather long, and complicated operations are required.

The Italian patent no. 0216861, Spanish utility model no. 9002802, German patent application no. 1684060, French utility model no 2652132 disclose systems for anchoring plates to walls including grooves formed on the plates so that these grooves can be engaged by a connecting member which connects the plates to horizontal profiles which are fixed to the wall. However, in practice it has been observed that this system is not free from drawbacks, because the plates tend to break under high pressures, for example under the force of wind, which for very tall buildings reaches a speed of 150-200 km/h and produces very high pressure peaks on the plates. Furthermore, the mounting is not accurate enough, since the grooves formed on the plates are not all identical, due for example to the wear of the disk of the tool which produces these grooves, and a proportional misalignment is a direct consequence of this. Furthermore, despite the need to tighten a large number of locking screws, a certain play remains; this play is very dangerous, because it causes an inaccurate alignment and entails a harmful effect in the course of time allowing a "flapping" effect induced by the wind within this play. Furthermore, fitting times are still rather long and complicated operations are still necessary.

PCT Application WO 89/02960 and US patent N° 4 635 424 disclose systems suitable for covering surfaces and particularly ceilings with plates. In particular WO 89/02960, which is reflected in the preamble of claim 1 of the present application, discloses a connecting member in which the external pair of abutments and the internal pair of abutments are perpendicular. For the purposes of the present application "external" designates the part directed towards the plate and "internal" designates the part directed toward the wall.

The aim of the present invention is therefore to overcome the above drawbacks with a facing system and a process which allow precise fitting, with an excellent aesthetic effect, while reducing the working time.

An object of the invention is to avoid play between elements, so as to provide a durable and reliable mounting even in the presence of strong winds.

Another object of the invention is to prevent the manual adjusting of parts, such as for example screws, bolts, etc., to achieve the double aim of reducing the working time and of eliminating critical parts that always tend to break and oxidize.

Another object of the invention is to obtain perfect planarity, independently of the depth of the grooves formed in the plates.

Another object is to allow the installation of plates even on inclined walls or on ceilings.

Another object is to allow prefabrication of a wall complete with plates in a factory.

Another object of the invention is to reduce the depth of the cantilevered part of the connecting member from a length of approximately 20-25 mm to 3-10 mm, thus increasing the overall reliability of the entire system.

This aim, these objects and others are achieved by a facing system according to claim 1.

Further characteristics and advantages of the invention will become apparent from the description of two preferred but not exclusive embodiments of the facing system, illustrated only by way of non-limitative example in the accompanying drawings, wherein:
Figure 1 is a sectional side view of the facing system according to the invention during assembly;
Figure 2 is a sectional side view of the facing system of Figure 1 after assembly;
Figure 3 is a sectional side view of a second embodiment of the facing system according to the invention during assembly;
Figure 4 is a side view of the facing system of Figure 3 after assembly;
Figure 5 is a perspective view of a detail of the facing system of Figure 1;
Figure 6 is a perspective view of a detail of the facing system of Figure 3;
Figure 7 is a sectional side view of the facing system according to a third embodiment of the invention during assembly;
Figure 8 is a sectional side view of the facing system of Figure 7 after assembly;
Figure 9 is a perspective view of a detail of the facing system of Figure 7;
Figure 10 is a perspective view of a detail of the facing system according to a fourth embodiment of the invention.

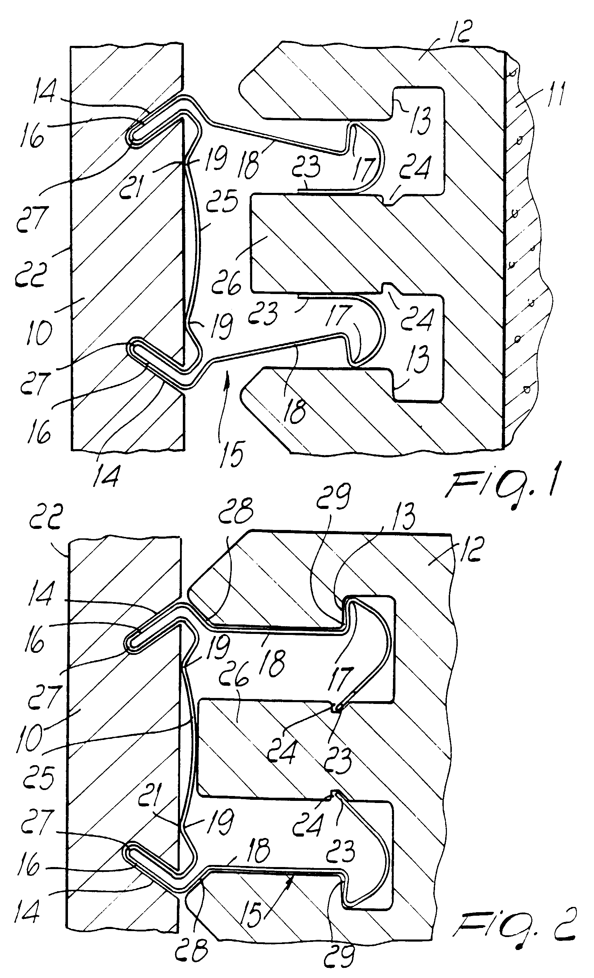

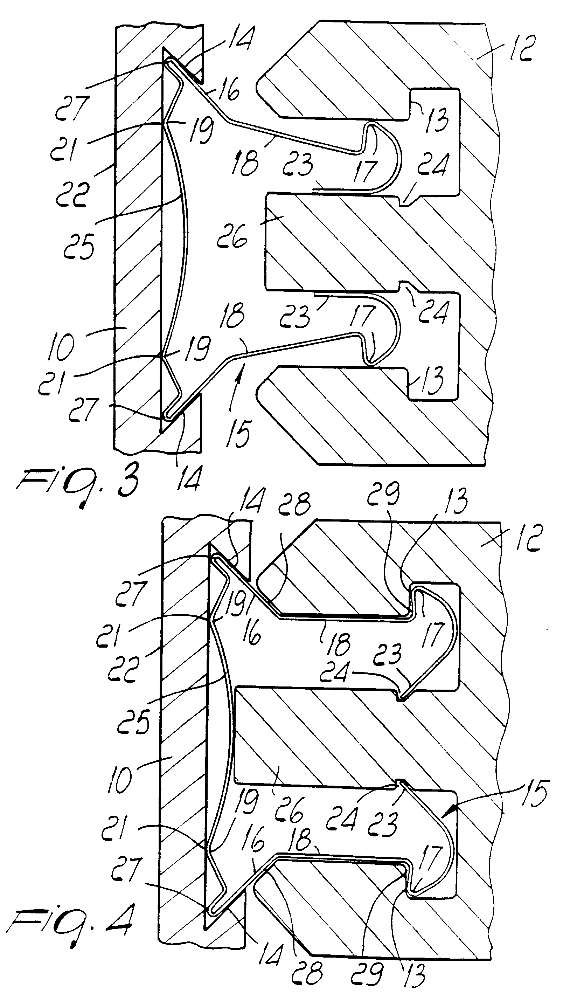

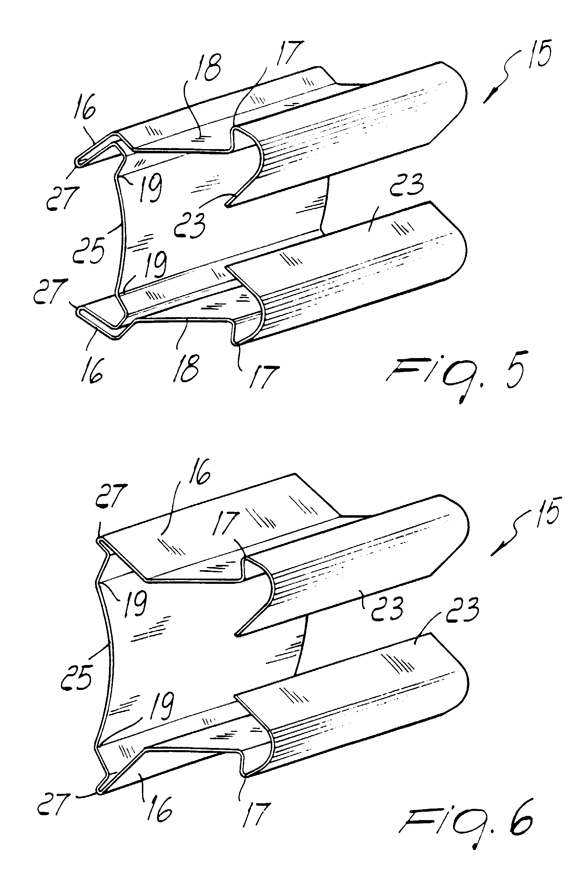

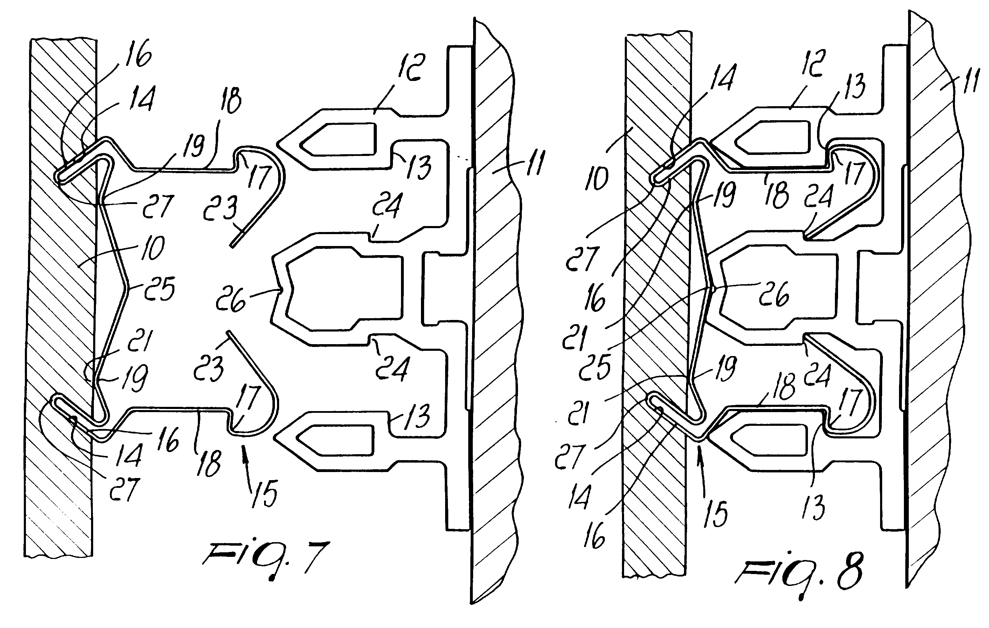

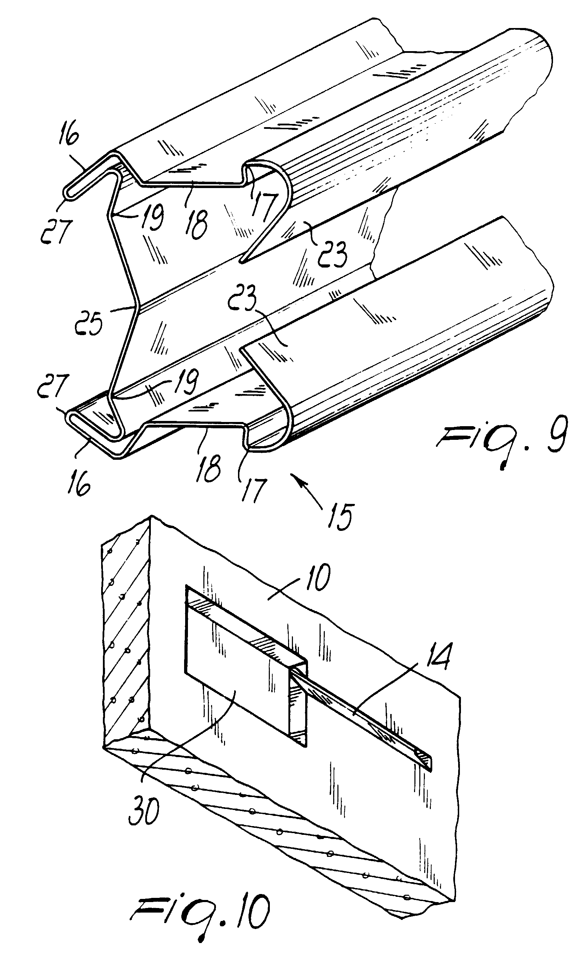

With reference to Figures 1 to 10, the facing system according to the invention for anchoring a plate 10 to a vertical wall 11 includes a horizontal profile 12 which can be fastened to the wall 11. A first pair of supporting recesses 13 is formed in the horizontal profile and extends horizontally. In particular, the first pair of recesses 13 is arranged on a plane which is substantially parallel to the wall.

A second pair of recesses 14 is formed in the body of the plate 10. The recesses 14 can be obtained either by machining the plate 10 with a rotary-disk tool or, with particular reference to the second preferred embodiment, shown in Figures 3, 4 and 6, directly during the molding of the tile. In this second case, the set of abutments 14 has the so-called dovetail shape.

A connecting member, generally designated by the reference numeral 15, connects the plate 10 to the profile 12. In particular, the connecting member 15 has an external part, where "external" designates the part directed toward the plate, and an internal part, where "internal" designates the part directed toward the wall. The external part of the connecting member 15 has an external pair of protruding members 16 which are shaped complementarily to the second pair of recesses 14, so as to be able to engage them adequately. The internal part of the connecting member 15 is provided with an internal pair of protuding members 17 which are elastically flexible by virtue of the flexing of the portion 18. The protuding members 17 are shaped complementarily to the first pair of recesses 13 and are suitable to engage them with a snap-together action.

Preferably, the external part of the connecting member 15 includes a fifth pair of pushing members 19 which is suitable to engage a rear region 21 of the plate 10 which is arranged parallel to an external face 22 of the plate 10. In particular, the rear area 21 of the plate 10 is simply a region which can act as reference so as to maintain the parallel arrangement of the external face 22 of the plate 10.

Preferably, the internal part of the connecting member 15 includes a sixth pair of elastic members 23; these elastic members are complementary and are suitable to elastically engage, in a snap-together manner, a seventh pair of recesses 24 arranged on the profile 12. The sixth pair of elastic members 23 and the seventh pair of recesses 24 act so as to generate a force which is directed so as to prevent disengagement between the first pair of recesses 13 and the internal pair of protruding members 17. In particular, the elastic end 23 of the connecting member 15 forms the sixth pair of elastic members 23. In this manner, engagement between the first pair of recesses 13 and the internal pair of protruding members 17 is ensured, because the end 23 is locked in the seat 23 and prevents the connecting member from being extracted by forcing.

Preferably, both the external pair of protruding members 16 and the internal pair of protruding members 17 are formed with a folded part of the connecting member 15. According to a preferred embodiment, the connecting member 15 is formed with a single piece of folded elastic steel with a thickness between 0.3 and 0.6 mm, preferably between 0.35 and 0.55 mm and more preferably between 0.4 and 0.5 mm. Preferably, the connecting member 15 includes a central region 25 which cambers inward toward the wall 11. This central region is suitable to be engaged by an extension 26 of the profile 12 so that the extension 26 can press against the central region 25 so as to elastically deform the central region 25 and change the position of the external pair of protruding members 16, so as to improve engagement with the second pair of recesses 14. More preferably the extension 26 of the profile 12 has a concave angular shape, and the recessed central region 25 has convex angular shape. The coupling of the concave-convex shapes improves the vertical stability of the plate.

According to the first embodiment, with particular reference to Figures 1, 2, 5, 7-9 the external pair of protruding members 16 tapers inward. According to the second preferred embodiment, with particular reference to Figures 3, 4 and 6, the external pair of protruding members 16 widens outward. Preferably, the length of the connecting member 15, measured horizontally, is between 15 and 50 mm, more preferably between 20 and 40 mm, and even more preferably between 25 and 35 mm.

The end 27 of the external pair of protruding members 16 can be rounded, so as to reduce shearing pressure on the plate and limit the possibility of breakage.

It is provided for that the external protruding members 16 may yield elastically in the space 28 formed between the connecting member 15 and the profile 12. Similarly, also the internal pair of protruding members 17 may elastically yield in the region 29 between the connecting member 15 and the profile 12. This elastic yield allows a certain controlled movement of the plate 10 with respect to wall 11. In this manner not only are plays kept under control, but it is possible to reduce the impact of external forces on the various couplings. With respect to the portion 18 of the connecting member 15, the profile 12 acts as a support which vertically supports the connecting member 15 so as to avoid unwanted deformations. In particular, the profile 12 externally supports the connecting member 15 substantially along the entire portion which joins the external pair of abutments 16 with the internal pair of protruding members 17. The unsupported portion has a length of approximately 3 mm.

The method according to the invention thus includes the use of a plurality of devices as described above. In a first step, the connecting members 15 are fitted to the plates 10. For this purpose it is sufficient to slide the protruding members 16 laterally inside the recesses 14 until the connecting members 15 are located in the required region of the plates 10.

Recesses 14 are usually obtained on the sides of plates 10, but may be obtained also on the inner part of the plates 10. In this latter case recesses 14 are dead and the connecting members 15 may be mounted on plates 10, by a manual pressure perpendicular to the ends 23, so as to push one against the other and so as to diverge protruding members 16, with particular reference to the embodiment reported on figures 1, 2, 5. When protruding members 16 are diverged it is possible to insert them into recesses 14 of the plate. This operation may be impossible with plates having a large thickness and with longer protruding members 16. In this latter case, with particular reference to figure 10, each recess 14 comprises a chamber 30 having a rectangular cross-section which is obtained into the body of the plate. The chamber 30 is large enough to arrange inside abutments 16 which can then slide laterally inside recesses 14. The connecting members 15 can so be placed in any requested position.

This first step may be performed prior to the time of final installation and in a suitable location, other than the building site. In a second step, the plates thus prepared are fitted by snap-together coupling of the first pair of recesses 13 and of the internal pair of protruding members 17. This coupling occurs by simple pressure, so as to force the end 23 to flex and allow the entry of the connecting member 15 in its seat. Correct insertion can be checked acoustically, since it is possible to clearly hear first of all the snap of the insertion of the internal pair of protruding members 17 and then the snap of the sixth pair of abutments 23. Simultaneously, the extension 26 of the profile is located automatically against the recessed part 25 of the connecting member so that by means of the simple operation of pressing to insert the plate all the abutments are placed under tension, to ensure optimum locking. The particular shape of extension 26 and the recessed part 25 of the connecting body 15 is an additional centering means between recesses 14 and the central part of profile 12, so achieving an improved horizontal selfalignement of the upper and lower edges of the mounted plates.

If it is necessary to replace a defective plate in a finished wall, the detective plate can be removed or broken, and then a new plate can be simply inserted by snap-together coupling, without disturbing the surrounding plates.

In practice it has been observed that the invention allows to obtain a very stable anchoring with excellent aesthetic finish, which is shown by an optimum complanarity of the face plane, by the regularity of the vista, i.e. of the spaces between the plates, both horizontally and vertically.

This is automatically achieved by pressure coupling between the connecting members 15 and the profile 12, so avoiding the need of manual adjustment operations carried out for example by means of screws, squares, silicon sealants, etc.

Furthermore it is ensured limitless durability for the damping action of the connecting member 15, especially if suitable materials, such as for example elastic stainless steel for the connecting member 15, are used.

## Claims

1. A facing system for a building comprising a facade plate (10), a profile (12) intended to be mounted horizontally on the building and a connecting member (15) for connecting said plate (10) to said profile (12); an external part of said connecting member (15) being provided with an external pair of protruding members (16) which are complementary and are adapted to engage a second pair (14) of recesses, formed in the body of said plate; an internal part of said connecting member (15) being provided with an internal pair of protruding members (17) which are elastically flexible, complementary and adapted to engage in a snap-together manner a first pair of recesses (13) formed on said profile (12); characterized in that said external pair of protruding members (16) and said internal pair of protruding members (17) are substantially parallel and in that said internal part of said connecting member (15) comprises a pair of elastic members (23) which are complementary and are suitable to engage, elastically and in a snap-together manner, a third pair of recesses (24) located on said profile (12); said pair of elastic members (23) and said third pair of recesses (24) generating a force which is directed so as to prevent disengagement between said first pair of recesses (13) and said internal (17) pair of protruding members (17).

2. A facing system according to claim 1, wherein said external part of said connecting member (15) comprises a pair of pushing members (19) adapted to engage a rear area (21) of said plate (10) which is arranged parallel to an external face of said plate (10).

3. A facing system according to claim 1 or 2, wherein said pair of elastic members (23) is formed by the elastic end of said internal part of said connecting member (15).

4. A facing system according to at least one of the preceding claims, wherein said external pair (16) and/or said internal pair (17) is formed with a folded part of said connecting member (15).

5. A facing system according to at least one of the preceding claims, wherein said external part of said connecting member (15) comprises a recessed central region (25) adapted to be engaged by an extension (26) of said profile (12) so as to elastically deform the position of said external pair of protruding members (16) and improve engagement with said second pair of recesses (14).

6. A facing system according to claim 5 wherein said extension (26) of said profile (12) has a concave angular shape, and said recessed central region (25) has convex angular shape; the coupling of said concave-convex shapes improving the vertical stability.

7. A facing system according to at least one of the preceding claims, wherein said external pair of protruding members (16) widens outward.

8. A facing system according to at least one of the preceding claims, wherein said external pair of protruding members (16) tapers inward.

9. A facing system according to at least one of the preceding claims, wherein said connecting member (15) is formed from a single piece of folded elastic steel.

10. A facing system according to claim 9, wherein the thickness of said steel is comprised between 0.3 and 0.6 mm, preferably between 0.35 and 0.55 mm, and more preferably between 0.4 and 0.5 mm.

11. A facing system according to at least one of the preceding claims, wherein the horizontal length of said connecting member (15) is comprised between 15 and 50 mm, preferably between 20 and 40 mm, more preferably between 25 and 35 mm.

12. A facing system according to at least one of the preceding claims, wherein the end of said external pair of protruding members (16) is rounded.

13. A facing system according to at least one of the preceding claims, wherein said external (16) and/or internal (17) pair allow some give in order to damp external forces and/or to improve centering.

14. A facing system according to at least one of the preceding claims, wherein said profile (12) externally supports said connecting member (15) substantially along the entire portion which joins said external pair of protruding members (16) with said internal pair of protruding members (17).

15. Method for the assembly of a wall of plates by using a facing system according to claim 1, comprising: a first step in which said connecting members (15) are fitted on said plates (10); and a second step in which said plates (10) are assembled by snap-together coupling of said first (13) and internal (17) pairs.

16. Method according to claim 15, for replacing a defective plate (10) in a finished wall, comprising the breakage or removal of said defective plate (10) and the insertion, by snap-together coupling, of a new plate (10) without acting on the surrounding plates.

## Patentansprüche

1. Verkleidungssystem für ein Gebäude, das eine Fassadenplatte (10), ein Profil (12), das vorgesehen ist, horizontal am Gebäude befestigt zu werden, und ein Verbindungselement (15) zur Verbindung dieser Platte (10) mit diesem Profil (12) umfaßt; wobei ein äußerer Teil dieses Verbindungselements (15) mit einem äußeren Paar vorstehender Teile (16) versehen ist, die sich gegenüberstehen und angepaßt sind, in ein zweites Paar (14) Aussparungen einzugreifen, die im Korpus dieser Platte geformt sind; wobei ein innerer Teil dieses Verbindungselements (15) mit einem inneren Paar vorstehender Teile (17) versehen ist, die elastisch flexibel sind, sich gegenüberstehen und angepaßt sind, in einer Art Schnappverbindung in ein erstes Paar Aussparungen (13) einzugreifen, die in diesem Profil (12) geformt sind; dadurch gekennzeichnet, daß dieses äußere Paar vorstehender Teile (16) und dieses innere Paar vorstehender Teile (17) im wesentlichen parallel sind, und dadurch, daß dieser innere Teil dieses Verbindungselements (15) ein Paar elastischer Teile (23) umfaßt, die sich gegenüberstehen und geeignet sind, elastisch und in einer Art Schnappverbindung in ein drittes Paar Aussparungen (24) einzugreifen, die sich an diesem Profil (12) befinden; wobei dieses Paar elastischer Teile (23) und dieses dritte Paar Aussparungen (24) eine Kraft erzeugen, die darauf gerichtet ist, ein Lösen zwischen diesem ersten Paar Aussparungen (13) und diesem inneren Paar vorstehender Teile (17) zu verhindern.

2. Verkleidungssystem nach Anspruch 1, wobei dieser äußere Teil dieses Verbindungselements (15) ein Paar Abstandhalter (19) aufweist, die angepaßt sind, um an einer hinteren Fläche (21) dieser Platte (10) anzugreifen, die parallel zu einer äußeren Fläche dieses Platte (10) angeordnet ist.

3. Verkleidungssystem nach Anspruch 1 oder 2, wobei dieses Paar elastischer Teile (23) durch das elastische Ende dieses inneren Teils dieses Verbindungselements (15) gebildet wird.

4. Verkleidungssystem nach zumindest einem der vorstehenden Ansprüche, wobei dieses äußere Paar (16) und/oder dieses innere Paar (17) vorstehender Teile durch einen gebogenen Teil dieses Verbindungselements (15) gebildet werden.

5. Verkleidungssystem nach zumindest einem der vorstehenden Ansprüche, wobei dieser äußere Teil dieses Verbindungselements (15) einen zurückgesetzten mittleren Bereich (25) umfaßt, der angepaßt ist, an einer Ausdehnung (26) dieses Profils (12) anzugreifen, um die Form des äußeren Paars vorstehender Teile (16) elastisch zu deformieren, und um den Eingriff in dieses zweite Paar Aussparungen (14) zu verbessern.

6. Verkleidungssystem nach Anspruch 5, wobei diese Ausdehnung (26) dieses Profils (12) eine konkav-winklige Form hat, und wobei dieser zurückgesetzte mittlere Bereich (25) eine konvex-winklige Form hat; wobei die Verbindung dieser konkav-konvexen Formen die vertikale Stabilität verbessert.

7. Verkleidungssystem nach zumindest einem der vorstehenden Ansprüche, wobei sich dieses äußere Paar vorstehender Teile (16) nach außen hin verbreitert.

8. Verkleidungssystem nach zumindest einem der vorstehenden Ansprüche, wobei sich dieses äußere Paar vorstehender Teile (16) nach innen zuspitzt.

9. Verkleidungssystem nach zumindest einem der vorstehenden Ansprüche, wobei dieses Verbindungselement (15) aus einem einzigen Stück gebogenem Federstahl geformt ist.

10. Verkleidungssystem nach Anspruch 9, wobei die Dicke dieses Stahls zwischen 0,3 und 0,6 mm, besser zwischen 0,35 und 0,55 mm, und am besten zwischen 0,4 und 0,5 mm beträgt.

11. Verkleidungssystem nach zumindest einem der vorstehenden Ansprüche, wobei die horizontale Länge dieses Verbindungselements (15) zwischen 15 und 50 mm, besser zwischen 20 und 40 mm, und am besten zwischen 25 und 35 mm beträgt.

12. Verkleidungssystem nach zumindest einem der vorstehenden Ansprüche, wobei die Enden dieses äußeren Paars vorstehender Teile (16) gerundet sind.

13. Verkleidungssystem nach zumindest einem der vorstehenden Ansprüche, wobei diese äußeren (16) und/oder inneren (17) Paare vorstehender Teile einigen Spielraum gestatten, um äußere Kräfte zu dämpfen und/oder um die Zentrierung zu verbessern.

14. Verkleidungssystem nach zumindest einem der vorstehenden Ansprüche, wobei dieses Profil (12) außen dieses Verbindungselement (15) im wesentlichen entlang des gesamten Teils unterstützt, das dieses äußere Paar vorstehender Teile (16) mit diesem inneren Paar vorstehender Teile (17) verbindet.

15. Verfahren zur Montage einer Plattenwand, indem ein Verkleidungssystem nach Anspruch 1 verwendet wird, umfassend:
• einen ersten Schritt, in dem diese Verbindungselemente (15) an diesen Platten (10) angebracht werden; und
• einen zweiten Schritt, in dem diese Platten (10) durch eine Schnappverbindung zwischen diesem ersten Paar Aussparungen (13) und diesem inneren Paar vorstehender Teile (17) montiert werden.

16. Verfahren nach Anspruch 15 zum Ersetzen einer defekten Platte (10) in einer fertigen Wand, das das Zerbrechen oder das Entfernen dieser defekten Platte (10) und das Einsetzen einer neuen Platte (10) durch eine Schnappverbindung umfaßt, ohne auf die umgebenden Platten einzuwirken.

## Revendications

1. Système de parement pour un bâtiment, comprenant une plaque de façade (10), un profilé (12) destiné à être monté horizontalement sur le bâtiment, et un élément de liaison (15) destiné à relier ladite plaque (10) audit profilé (12); une partie extérieure dudit élément de liaison (15) étant pourvue d'une paire d'éléments saillants extérieurs (16) qui sont complémentaires d'une seconde paire d'évidements (14) ménagés dans le corps de ladite plaque et sont conçus pour s'engager dans ces évidements; une partie intérieure dudit élément de liaison (15) étant pourvue d'une paire d'éléments saillants intérieurs (17) qui sont élastiquement flexibles, complémentaires d'une première paire d'évidements (13) ménagés dans ledit profilé (12), et conçus pour s'engager par enclenchement dans ces évidements; caractérisé en ce que ladite paire d'éléments saillants extérieurs (16) et ladite paire d'éléments saillants intérieurs (17) sont sensiblement parallèles, et en ce que ladite partie intérieure dudit élément de liaison (15) comprend une paire d'éléments élastiques (23), qui sont complémentaires d'une troisième paire d'évidements (24) disposés dans ledit profilé (12), et sont conçus pour s'engager de façon élastique et par enclenchement dans ces évidements; ladite paire d'éléments élastiques (23) et ladite troisième paire d'évidements (24) générant une force qui est dirigée de manière à empêcher tout désengagement de ladite première paire d'évidements (13) par rapport à ladite paire d'éléments saillants intérieurs (17).

2. Système de parement selon la revendication 1, dans lequel ladite partie extérieure dudit élément de liaison (15) comprend une paire d'éléments de poussée (19) conçus pour s'engager derrière une zone arrière (21) de ladite plaque (10), qui est disposée parallèlement à une face extérieure de ladite plaque (10).

3. Système de parement selon la revendication 1 ou 2, dans lequel ladite paire d'éléments élastiques (23) est formée par l'extrémité élastique de ladite partie intérieure dudit élément de liaison (15).

4. Système de parement selon l'une au moins des revendications précédentes, dans lequel ladite paire extérieure (16) et/ou ladite paire intérieure (17) est formée avec une partie pliée dudit élément de liaison (15).

5. Système de parement selon l'une au moins des revendications précédentes, dans lequel ladite partie extérieure dudit élément de liaison (15) comprend une partie centrale évidée (25) conçue pour entrer en engagement avec un prolongement (26) dudit profilé (12) de manière à se déformer élastiquement en changeant la position de ladite paire extérieure d'éléments saillants (16), et de manière à améliorer ainsi l'engagement dans ladite deuxième paire d'évidements (14).

6. Système de parement selon la revendication 5, dans lequel ledit prolongement (26) dudit profilé (12) présente une forme angulaire concave, et ladite partie centrale évidée (25) présente une forme angulaire convexe; le couplage desdites formes concave-convexe améliorant la stabilité verticale.

7. Système de parement selon l'une au moins des revendications précédentes, dans lequel ladite paire d'éléments saillants extérieurs (16) s'élargit vers l'extérieur.

8. Système de parement selon l'une au moins des revendications précédentes, dans lequel ladite paire d'éléments saillants extérieurs (16) se resserre vers l'intérieur.

9. Système de parement selon l'une au moins des revendications précédentes, dans lequel ledit élément de liaison (15) est réalisé à partir d'une seule pièce pliée en acier élastique.

10. Système de parement selon la revendication 9, dans lequel l'épaisseur dudit acier est comprise entre 0,3 et 0,6 mm, de préférence entre 0,35 et 0,55 mm, et de préférence encore entre 0,4 et 0,5 mm.

11. Système de parement selon l'une au moins des revendications précédentes, dans lequel la longueur horizontale dudit élément de liaison (15) est comprise entre 15 et 50 mm, de préférence entre 20 et 40 mm, et de préférence encore entre 25 et 35 mm.

12. Système de parement selon l'une au moins des revendications précédentes, dans lequel l'extrémité de ladite paire d'éléments saillants extérieurs (16) est arrondie.

13. Système de parement selon l'une au moins des revendications précédentes, dans lequel lesdites paires extérieure (16) et/ou intérieure (17) permettent un jeu de manière à amortir des forces extérieures et/ou à améliorer le centrage.

14. Système de parement selon l'une au moins des revendications précédentes, dans lequel ledit profilé (12) soutient ledit élément de liaison (15) extérieurement pour l'essentiel le long de toute la partie qui joint ladite paire d'éléments saillants extérieurs (1.6) à ladite paire d'éléments saillants intérieurs (17).

15. Procédé d'assemblage d'une paroi en plaques, en employant un système de parement selon la revendication 1, comprenant: une première étape, dans laquelle lesdits éléments de liaison (15) sont montées sur lesdites plaques (10); et une deuxième étape, dans laquelle lesdites plaques (10) sont assemblées en accouplant par enclenchement lesdites premières paires (13) et lesdites paires intérieures (17).

16. Procédé selon la revendication 15 permettant de remplacer une plaque défectueuse (10) sur une paroi finie, comprenant la destruction ou l'enlèvement de ladite plaque défectueuse (10) et l'insertion, par accouplement par enclenchement, d'une plaque neuve (10), sans agir sur les plaques environnantes.
